# EUROPEAN PATENT SPECIFICATION

(11) **EP 2 804 352 B1**
(45) Date of publication and mention of the grant of the patent: **19.07.2017**
(21) Application number: 12888994.6
(22) Date of filing: 28.11.2012
(51) Int. Cl.: H04L 12/723

(54) **METHOD AND APPARATUS FOR PROCESSING RESIDUAL INFORMATION**
VERFAHREN UND VORRICHTUNG ZUR VERARBEITUNG VON RESTINFORMATIONEN
PROCÉDÉ ET APPAREIL POUR LE TRAITEMENT DE DONNÉES RÉSIDUELLES

(43) Date of publication of application: 19.11.2014
(73) Proprietor: Huawei Technologies Co., Ltd., Longgang District Shenzhen, Guangdong 518129 (CN)
(72) Inventor: YI, Meng, Shenzhen Guangdong 518129 (CN)
(74) Representative: Goddar, Heinz J.
(86) International application number: PCT/CN2012/085387
(87) International publication number: WO 2014/082211

(56) References cited:
- CN-A- 1 471 276
- CN-A- 102 143 032
- CN-A- 102 469 009
- US-A1- 2006 182 035
- US-A1- 2012 092 986

## Description

### TECHNICAL FIELD

The present invention relates to the communications field, and in particular, to a method and an apparatus for processing residual information.

### BACKGROUND

After a network runs for a period, some residual information often occurs, which may lead to a waste of resources and sometimes may cause a resource allocation conflict, thereby resulting in a problem such as a service establishment failure. Common scenarios in which residual information is caused to occur on a network are generally as follows:
Scenario 1: When a label switched path (Label Switched Path, LSP for short) is deleted or degraded, residual information occurs because link communication is faulty and a downstream network element does not perform delete or degrade processing.
Scenario 2: When an LSP is deleted or degraded, residual information occurs because processing by a downstream network element fails to perform delete or degrade processing.
Scenario 3: When an LSP is deleted or degraded, residual information occurs because a downstream network element resets and the downstream network element does not perform delete or degrade processing.

In the prior art, each network element starts a global residual information detection timer during initialization to periodically detect whether the network element has residual information. Therefore, the network element cannot detect residual information immediately after the residual information occurs, and has to wait to perform detection until the next detection period arrives. In addition, if a detection period is set too short, system running efficiency is affected; if a detection period is set too long, realtimeness of detection is affected.

Meanwhile, in the prior art, because there is no associated LSP information on a resource, each network element determines whether there is residual information merely based on a bandwidth occupation state of a link. The solution is complicated and has a poor scalability, and there is a possibility of a determining error. In addition, with constant enhancement of a service function, it may be foreseen that the bandwidth occupation state may further extend, and a determining principle in the existing solution needs to be revised constantly, so that various bandwidth occupation states and a combination of the bandwidth occupation states are covered. The entire solution becomes more and more complicated and difficult to extend.

Moreover, in the existing solution, detection and clearing of residual information are performed in a unit of a link. However, residual information is a concept in view of an LSP, that is, residual information of a certain LSP. Because end-to-end LSP information cannot be viewed, a case in which residual information cannot be detected may sometimes occur, and residual information on the entire LSP needs to be detected and cleared link by link in serial; therefore, efficiency is low.

US 2006/182035 A1 discloses a method for efficiently load balancing a traffic engineering (TE) LSP from a head-end node to a tail-end node of a computer network. The method comprising: identifying a set of one or more paths with equal costs from the head-end node to the tail-end node, each path of the set having one or more associated links; determining a link value for each link of each path, the link value signifying the availability of the link; comparing the link values of the links having the least availability for each path; routing the TE-LSP over the path with the link having the greater availability of the links having the least availability for each path.

### SUMMARY

Embodiments of the present invention provide a method and an apparatus for processing residual information. The apparatus includes a path computation element (Path Computation Element, PCE for short) server and a path computation client (Path Computation Client, PCC for short), and can improve accuracy and efficiency for detecting residual information, thereby highly simplifying detection and clearing of residual information on an entire network.

According to a first aspect, a method for processing residual information is provided, and includes:
receiving, by a path computation element, PCE, server, first information, sent by a first PCC, about a first LSP, and determining, according to the first information, information about a resource occupied by the first LSP, wherein the first information includes a node and a link passed by the first LSP, and a timeslot occupied on the link;
obtaining a resource deletion situation corresponding to the first LSP after receiving second information, sent by the first PCC, about the first LSP, where the second information is used to indicate that the first LSP needs to be deleted or the first LSP needs to be degraded, wherein the second information is sent by the first PCC to the PCE server after the first PCC completes a deletion action, the resource deletion situation indicates which of the resources occupied by the first LSP have been deleted by a corresponding PCC; and
when the first LSP is determined by the PCE server to have residual information according to the information about the resource occupied by the first LSP and the resource deletion situation corresponding to the first LSP, sending simultaneously a notification message to PCCs having the residual information on the first LSP, where the notification message is used to indicate deletion or degradation of the first LSP; wherein the residual information includes control information on a control plane corresponding to the first LSP, and a residual cross connection on a forwarding plane corresponding to the first LSP.

With reference to the first aspect, in a first possible implementation manner of the first aspect, the obtaining a resource deletion situation corresponding to the first LSP includes:
starting a timer after receiving the second information, sent by the first PCC, about the first LSP; and
determining the resource deletion situation according to resource usage information of a PCC on the first LSP received within duration set on the timer, where the resource deletion situation indicates that a PCC has deleted a resource corresponding to the first LSP.

With reference to the first possible implementation manner of the first aspect, in a second possible implementation manner of the first aspect, the resource usage information of a PCC on the first LSP is carried by using an Open Shortest Path First OSPF (Open Shortest Path First, OSPF for short) flooding message.

With reference to the second possible implementation manner of the first aspect, in a third possible implementation manner of the first aspect, the duration set on the timer depends on OSPF domain convergence time.

With reference to the first aspect, the first possible implementation manner of the first aspect, the second possible implementation manner of the first aspect, the third possible implementation manner of the first aspect, in a fourth possible implementation manner of the first aspect, the notification message carries an address of a first node of a tunnel to which the first LSP belongs, an address of a last node of the tunnel, an identifier of the tunnel, and an identifier of the first LSP.

According to a second aspect, a method for processing residual information is provided, and includes:
sending first information about a first LSP to a PCE server, so that the PCE server determines, according to the first information, information about a resource occupied by the first LSP, wherein the first information includes a node and a link passed by the first LSP, and a timeslot occupied on the link; and
when it is determined that the first LSP needs to be deleted or degraded, sending second information about the first LSP to the PCE server, where the second information is used to indicate that the first LSP needs to be deleted or the first LSP needs to be degraded, so that the PCE server obtains a resource deletion situation corresponding to the first LSP after receiving the second information, wherein the second information is sent by the first PCC to a path computation element, PCE, server after the first PCC completes a deletion action, the resource deletion situation indicates which of the resources occupied by the first LSP have been deleted by a corresponding PCC; and when it is determined by the PCE server, that the first LSP has residual information according to the information about the resource occupied by the first LSP and the resource deletion situation corresponding to the first LSP, sending simultaneously a notification message to PCCs having the residual information on the first LSP, where the notification message is used to indicate deletion or degradation of the first LSP; wherein the residual information includes control information on a control plane corresponding to the first LSP, and a residual cross connection on a forwarding plane corresponding to the first LSP.

According to a third aspect, a path computation element PCE server is provided, and includes a receiving unit, a first determining unit, an obtaining unit, a second determining unit, and a sending unit, where:
the receiving unit is configured to receive first information, sent by a first PCC, about a first LSP, wherein the first information includes a node and a link passed by the first LSP, and a timeslot occupied on the link;
the first determining unit is configured to determine, according to the first information received by the receiving unit, information about a resource occupied by the first LSP;
the receiving unit is further configured to receive second information, sent by the first PCC, about the first LSP, where the second information is used to indicate that the first LSP needs to be deleted or the first LSP needs to be degraded;
the obtaining unit is configured to, after the receiving unit receives the second information, obtain a resource deletion situation corresponding to the first LSP, wherein the second information is sent by the first PCC to the PCE server after the first PCC completes a deletion action, the resource deletion situation indicates which of the resources occupied by the first LSP have been deleted by a corresponding PCC;
the second determining unit is configured to determine whether the first LSP has residual information according to the information about the resource occupied by the first LSP and the resource deletion situation corresponding to the first LSP; and
the sending unit is configured to, when the second determining unit determines that the first LSP has residual information, send simultaneously a notification message to PCCs having the residual information on the first LSP, where the notification message is used to indicate deletion or degradation of the first LSP; wherein the residual information includes control information on a control plane corresponding to the first LSP, and a residual cross connection on a forwarding plane corresponding to the first LSP.

With reference to the third aspect, in a first possible implementation manner of the third aspect, the obtaining unit includes a timer subunit and a determining subunit, where:
the timer subunit is configured to start a timer after the receiving unit receives the second information, sent by the first PCC, about the first LSP; and
the determining subunit is configured to determine the resource deletion situation according to resource usage information of a PCC on the first LSP received by the receiving unit within duration set on the timer, where the resource deletion situation indicates that a PCC has deleted a resource corresponding to the first LSP.

With reference to the first possible implementation manner of the third aspect, in a second possible implementation manner of the third aspect, the resource usage information of the PCC on the first LSP is carried by using an OSPF flooding message.

With reference to the second possible implementation manner of the third aspect, in a third possible implementation manner of the third aspect, the duration set on the timer depends on OSPF domain convergence time.

With reference to the third aspect, the first possible implementation manner of the third aspect, the second possible implementation manner of the third aspect, or the third possible implementation manner of the third aspect, in a fourth possible implementation manner of the third aspect, the sending unit is specifically configured to:
send simultaneously the notification message to PCCs having the residual information on the first LSP.

With reference to the third aspect, the first possible implementation manner of the third aspect, the second possible implementation manner of the third aspect, the third possible implementation manner of the third aspect, or the fourth possible implementation manner of the third aspect, in a fifth possible implementation manner of the third aspect, the notification message carries an address of a first node of a tunnel to which the first LSP belongs, an address of a last node of the tunnel, an identifier of the tunnel, and an identifier of the first LSP.

According to a fourth aspect, a PCC is provided, and includes a first sending unit, a determining unit, and a second sending unit, where:
the first sending unit is configured to send first information about a first LSP to a PCE server, so that the PCE server determines, according to the first information, information about a resource occupied by the first LSP, wherein the first information includes a node and a link passed by the first LSP, and a timeslot occupied on the link;
the determining unit is configured to determine that the first LSP needs to be deleted or degraded; and
the second sending unit is configured to: when the determining unit determines that the first LSP needs to be deleted or degraded, send second information about the first LSP to the PCE server, where the second information is used to indicate that the first LSP needs to be deleted or the first LSP needs to be degraded, so that the PCE server obtains a resource deletion situation corresponding to the first LSP after receiving the second information, wherein the second information is sent by the first PCC to the PCE server after the first PCC completes a deletion action, the resource deletion situation indicates which of the resources occupied by the first LSP have been deleted by a corresponding PCC; and when it is determined by a PCE server that the first LSP has residual information according to the information about the resource occupied by the first LSP and the resource deletion situation corresponding to the first LSP, send simultaneously a notification message to a PCCs having the residual information on the first LSP, where the notification message is used to indicate deletion or degradation of the first LSP; wherein the residual information includes control information on a control plane corresponding to the first LSP, and a residual cross connection on a forwarding plane corresponding to the first LSP.

Therefore, in the embodiments of the present invention, first information, sent by a first PCC, about a first LSP is received and, according to the first information, information about a resource occupied by the first LSP is determined; a resource deletion situation corresponding to the first LSP is obtained after second information, sent by the first PCC, about the first LSP is received, where the second information is used to indicate that the first LSP needs to be deleted or the first LSP needs to be degraded; and when it is determined that the first LSP has residual information according to the information about the resource occupied by the first LSP and the source deletion situation corresponding to the first LSP, a notification message is sent to a PCC having the residual information on the first LSP, where the notification message is used to indicate deletion or degradation of the first LSP, by means of which accuracy for detecting residual information is improved, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for processing residual information according to an embodiment of the present invention;
FIG. 2 is a format of a standard notification (NOTIFICATION) object in the prior art;
FIG. 3 is a format of an extended NOTIFICATION object according to an embodiment of the present invention;
FIG. 4 is a schematic flowchart of a method for processing residual information according to another embodiment of the present invention;
FIG. 5 is a schematic flowchart of a method for processing residual information according to another embodiment of the present invention;
FIG. 6 is a schematic block diagram of a PCE server according to an embodiment of the present invention;
FIG. 7 is a schematic block diagram of a PCE server according to another embodiment of the present invention;
FIG. 8 is a schematic block diagram of a PCC according to an embodiment of the present invention;
FIG 9 is a schematic block diagram of a PCE server according to another embodiment of the present invention; and
FIG 10 is a schematic block diagram of a PCC according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

Embodiments of the present invention may be applied to networks such an automatically switched optical network (Automatic Switched Optical Network, ASON for short), a generalized multi-protocol label switching (Generalized Multi-Protocol Label Switching, GMPLS for short) network, or a Multiprotocol Label Switching (Multi-Protocol Label Switching, MPLS for short) network and the like.

In the embodiments of the present invention, a path computation client (Path Computation Client, PCC for short) is a network element that runs a client protocol in a path element computation protocol (Path Computation Element Communication Protocol, PCEP for short); and a path computation element (Path Computation Element, PCE for short) server is a network element that runs a server protocol in the PCEP.

In the embodiments of the present invention, deleting an LSP means that control information on a control plane that corresponds to the LSP and a cross connection on a forwarding plane that corresponds to the LSP need to be deleted; degrading an LSP means that only control information on a control plane that corresponds to the LSP needs to be deleted. In the embodiments of the present invention, residual information may be residual control information on a control plane, and may also be a residual cross connection on a forwarding plane.

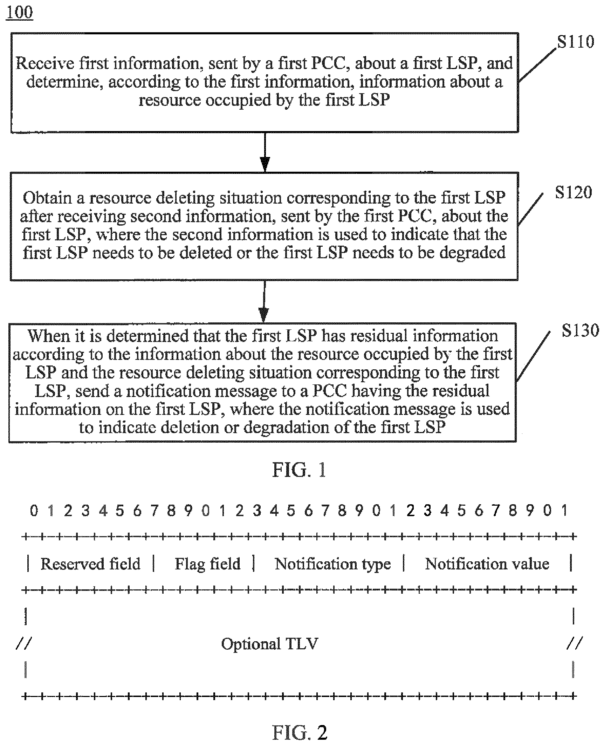

FIG. 1 is a schematic flowchart of a method 100 for processing residual information according to an embodiment of the present invention. As shown in FIG. 1, the method 100 includes:
S110: Receive first information, sent by a first PCC, about a first LSP, and determine, according to the first information, information about a resource occupied by the first LSP.

In this embodiment of the present invention, the first information may include: a node and a link passed by the first LSP, and a timeslot or a label occupied on the link. Thereby, the information about the resource occupied by the first LSP may be determined according to the first information.

S120: Obtain a resource deletion situation corresponding to the first LSP after receiving second information, sent by the first PCC, about the first LSP, where the second information is used to indicate that the first LSP needs to be deleted or the first LSP needs to be degraded.

S130: When it is determined that the first LSP has residual information according to the information about the resource occupied by the first LSP and the resource deletion situation corresponding to the first LSP, send a notification message to a PCC having the residual information on the first LSP, where the notification message is used to indicate deletion or degradation of the first LSP.

Specifically, after discovering a PCE server, the first PCC may actively establish a PCEP session with the PCE server. Once the PCEP session is established, the first PCC may send the first information to the PCE server, and notify, by using the first information, the PCE server of information about the first LSP that uses the first PCC as a first node, so as to indicate the resource occupied by the first LSP. After receiving the first information that is used to indicate the resource occupied by the first LSP and that is sent by the first PCC, the PCE server may establish, according to the first information, an association relationship between the first LSP and the resource occupied, where the resource occupied by the first LSP may be learned from the association relationship. If the first PCC needs to delete the first LSP or degrade the first LSP subsequently, after completing a deletion action, the first PCC may send, to the PCE server, the second information which is used to indicate that the first LSP needs to be deleted or degraded. After receiving the second information, the PCE server may obtain the resource deletion situation corresponding to the first LSP, that is, which resources, among the resources occupied by the first LSP have been deleted by the PCC on the first LSP. Then, the PCE server may determine whether the first LSP has residual information according to the resource occupied by the first LSP and the resource deletion situation. If there is residual information, the PCE server may send the notification message to the PCC having the residual information on the first LSP, so as to indicate the deletion or degradation of the first LSP. Therefore, after receiving the notification message, a corresponding PCC may perform processing of deleting or degrading the first LSP. If the first LSP needs to be deleted, the corresponding PCC deletes residual information on a control plane and a forwarding plane corresponding to the first LSP, including residual control information on the control plane and a residual cross connection on the forwarding plane. If the first LSP needs to be degraded, the corresponding PCC deletes merely the residual information on the control plane of the first LSP, including the residual control information on the control plane.

Therefore, in this embodiment of the present invention, first information, sent by a first PCC, about a first LSP is received and, according to the first information, information about a resource occupied by the first LSP is determined; a resource deletion situation corresponding to the first LSP is obtained after second information, sent by the first PCC, about the first LSP is received, where the second information is used to indicate that the first LSP needs to be deleted or the first LSP needs to be degraded; and when it is determined that the first LSP has residual information according to the information about the resource occupied by the first LSP and the source deletion situation corresponding to the first LSP, a notification message is sent to a PCC having the residual information on the first LSP, where the notification message is used to indicate deletion or degradation of the first LSP; by means of which accuracy for detecting residual information is improved, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

In this embodiment of the present invention, the obtaining a resource deletion situation corresponding to the first LSP in S 120 may include:
starting a timer after receiving the second information sent by the first PCC; and
determining the resource deletion situation according to resource usage information of the PCC on the first LSP received within duration set on the timer, where the resource deletion situation indicates that a PCC has deleted a resource corresponding to the first LSP. The resource usage information of the PCC may include a usage state of each resource on the PCC. The usage state of the resource may be one of the following two states: idle or occupied; further, an occupied state may further be one of the following two states: occupied by the forwarding and control planes, or occupied by the forwarding plane.

Specifically, when deleting the first LSP, the first PCC sends the second information to the PCE server before all PCCs on the first LSP are successfully deleted. Besides, when downstream communication is faulty, the first PCC, which serves as the first node, cannot determine whether the first LSP is completely and successfully deleted. Generally, the first PCC sends the second information immediately after completing processing of the deletion action of the first PCC. Therefore, after receiving the second information, the PCE server may start the timer to receive the resource usage information of the PCC on the first LSP within the duration set on the timer and, according to the resource usage information received within the duration set on the timer, determine the resource deletion situation of the first LSP, that is, which PCCs have deleted corresponding resources. In other words, when the PCC deletes the resource corresponding to the first LSP, the usage state of the resource is carried by using the resource usage information, and the PCE server may determine, according to the state of the resource, corresponding to the first LSP, in the resource usage information, that the resource corresponding to the first LSP on the PCC is deleted.

In this embodiment of the present invention, the resource usage information of the PCC received by the PCE server may be resource usage information directly sent to the PCE server by the PCC on the first LSP, and may also be resource usage information that is of the PCC on the first LSP and that is flooded by using an Open Shortest Path First (Open Shortest Path First, OSPF for short) protocol. Then, in this case, the duration set on the timer may be set according to OSPF domain convergence time, and the duration is generally in seconds.

In this embodiment of the present invention, sending a notification message to a PCC having the residual information on the first LSP in S130 may include:
sending simultaneously the notification message to PCCs having the residual information on the first LSP.

Specifically, when determining that the first LSP has the residual information according to the resource occupied by the first LSP and the resource deletion situation, the PCE server may send simultaneously the notification message to PCCs having the residual information on the first LSP, so as to indicate the deletion or degradation of the first LSP. That is, the PCE server performs detection and clearing of residual information at a granularity of an LSP, and end-to-end information may be viewed. Once there is residual information, the PCE server may send simultaneously the notification message to each PCC having the residual information, so that each PCC having the residual information may perform clearing of the residual information in parallel. Therefore, efficiency for clearing residual information may further be improved.

In this embodiment of the present invention, the notification message, used to indicate that the corresponding PCC deletes or degrades the first LSP, may carry an address of a first node of a tunnel to which the first LSP belongs, an address of a last node of the tunnel, and an identifier of the tunnel, and an identifier of the first LSP.

In this embodiment of the present invention, the notification message may be obtained by extension from an existing PCNtf (path computation notification, Path Computation Notification) message. A NOTIFICATION object in the PCNtf message may be extended. FIG 2 is a format of a standard NOTIFICATION object in the prior art, where:
RESERVED (8 bits): a reserved field, which is not used currently and must be set to 0 for sending, and is not processed by a receiver;
FLAGS (8 bits): a flag field, which has not any flag defined currently and must be set to 0 for sending, and is not processed by a receiver;
NT (Notification Type - 8 bits): a notification type; and
NV (Notification Value - 8 bits): a notification value, which is used to describe some additional information of the notification.

Because an assignment of NT=3 does not exist in the existing standard, the NOTIFICATION object may be extended as follows:
NT = 3------------means that the NOTIFICATION indicates that an LSP needs to be deleted or degraded;
NT = 3, NV = 1----------means that an LSP should be deleted; and
NT = 3, NV = 2----------means that an LSP should be degraded.

Therefore, the foregoing extension is merely an exemplary description. In this embodiment of the present invention, there may be other extensions. For example, values such as 4, 5, or 6 may be assigned to the NT. The embodiment of the present invention sets no limit thereon.

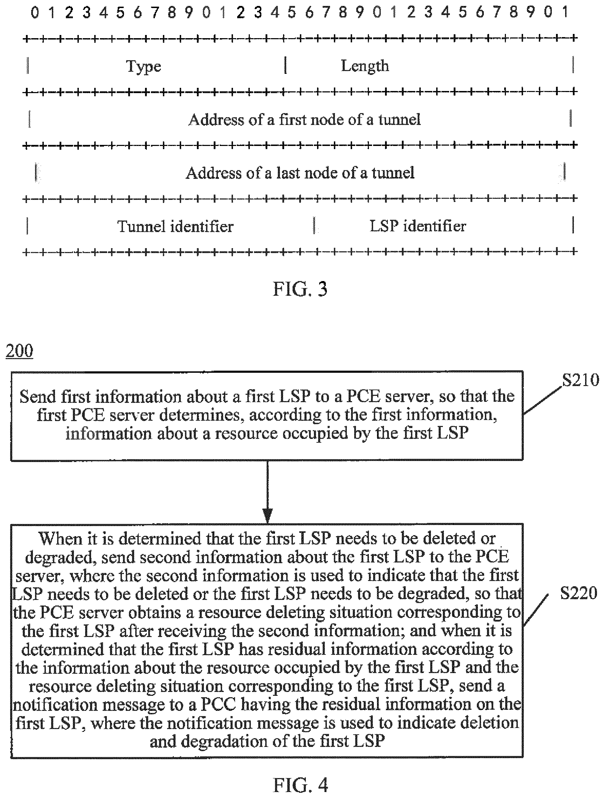

In this embodiment of the present invention, an optional TLV (Type Length Value) field in the standard NOTIFICATION object shown in FIG. 2 may also be extended, so as to carry four-tuples information of an LSP having the residual information, that is, an address of a first node of a tunnel to which the LSP belongs, an address of a last node of the tunnel, and an identifier of the tunnel, and an identifier of the LSP. FIG. 3 shows a specific extension, where type (Type) represents a type to which the four-tuples belongs, that is, LSP; length (Length) is a length of the four-tuples; an address of a first node of a tunnel is the address of the first node of the tunnel to which the LSP belongs; an address of a last node of a tunnel is the address of the last node of the tunnel to which the LSP belongs; a tunnel identifier is the identifier of the tunnel to which the LSP belongs; and an LSP identifier is the identifier of the LSP. It should be understood that an optional LTV shown in FIG. 3 is merely an exemplary description, and shall not constitute any limitation on the present invention.

Therefore, in this embodiment of the present invention, first information, sent by a first PCC, about a first LSP is received and, according to the first information, information about a resource occupied by the first LSP is determined; a resource deletion situation corresponding to the first LSP is obtained after second information, sent by the first PCC, about the first LSP is received, where the second information is used to indicate that the first LSP needs to be deleted or the first LSP needs to be degraded; and when it is determined that the first LSP has residual information according to the information about the resource occupied by the first LSP and the source deletion situation corresponding to the first LSP, a notification message is sent to a PCC having the residual information on the first LSP, where the notification message is used to indicate deletion or degradation of the first LSP, by means of which accuracy for detecting residual information is improved, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

The foregoing describes a method for processing residual information according to an embodiment of the present invention from a PCE server side perspective with reference to FIG. 1 to FIG. 3. The following describes a method for processing residual information according to an embodiment of the present invention from a first PCC (that is, a first node of a first LSP) side perspective.

FIG. 4 is a schematic flowchart of a method 200 for processing residual information according to an embodiment of the present invention. As shown in FIG. 4, the method 200 includes:
S210: Send first information about a first LSP to a PCE server, so that the PCE server determines, according to the first information, information about a resource occupied by the first LSP.
S220: When it is determined that the first LSP needs to be deleted or degraded, send second information about the first LSP to the PCE server, where the second information is used to indicate that the first LSP needs to be deleted or the first LSP needs to be degraded, so that the PCE server obtains a resource deletion situation corresponding to the first LSP after receiving the second information; and when it is determined that the first LSP has residual information according to the information about the resource occupied by the first LSP and the resource deletion situation corresponding to the first LSP, send a notification message to a PCC having the residual information on the first LSP, where the notification message is used to indicate deletion or degradation of the first LSP.

Specifically, after discovering the PCE server, a first PCC may actively establish a PCEP session with the PCE server. Once the PCEP session is established, the first PCC may send the first information to the PCE server, and notify, by using the first information, the PCE server of information about the first LSP that uses the first PCC as a first node, so as to indicate the resource occupied by the first LSP. After receiving the first information that is used to indicate the resource occupied by the first LSP and that is sent by the first PCC, the PCE server may establish, according to the first information, an association relationship between the first LSP and the resource occupied, where it may be learned, from the association relationship, which resources are occupied by the first LSP. If the first PCC needs to delete the first LSP or degrade the first LSP subsequently, after completing a deletion action, the first PCC may send, to the PCE server, the second information which is used to indicate that the first LSP needs to be deleted or degraded. After receiving the second information, the PCE server may obtain the resource deletion situation corresponding to the first LSP, that is, which of the resources occupied by the first LSP, have been deleted by a corresponding PCC. Then, the PCE server may determine whether the first LSP has residual information according to the resource occupied by the first LSP and the resource deletion situation. If there is residual information, the PCE server may send a notification message to a PCC having the residual information on the first LSP, so as to indicate deletion or degradation of the first LSP. Thereby, after receiving the notification message, a corresponding PCC may perform processing of deleting or degrading the first LSP.

Therefore, in this embodiment of the present invention, first information that is used to indicate a resource occupied by a first LSP is sent to a PCE server, and when it is determined that the first LSP needs to be deleted or degraded, second information is sent to the PCE server, where the second information is used to indicate that the first LSP needs to be deleted or the first LSP needs to be degraded. Thereby, after the PCE server receives the second information, a resource deletion situation corresponding to the first LSP may be obtained; and when it is determined that the first LSP has residual information according to information about the resource occupied by the first LSP and the resource deletion situation corresponding to the first LSP, a notification message is sent to a PCC having the residual information on the first LSP, where the notification message is used to indicate deletion or degradation of the first LSP. Therefore, accuracy for detecting residual information is improved, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

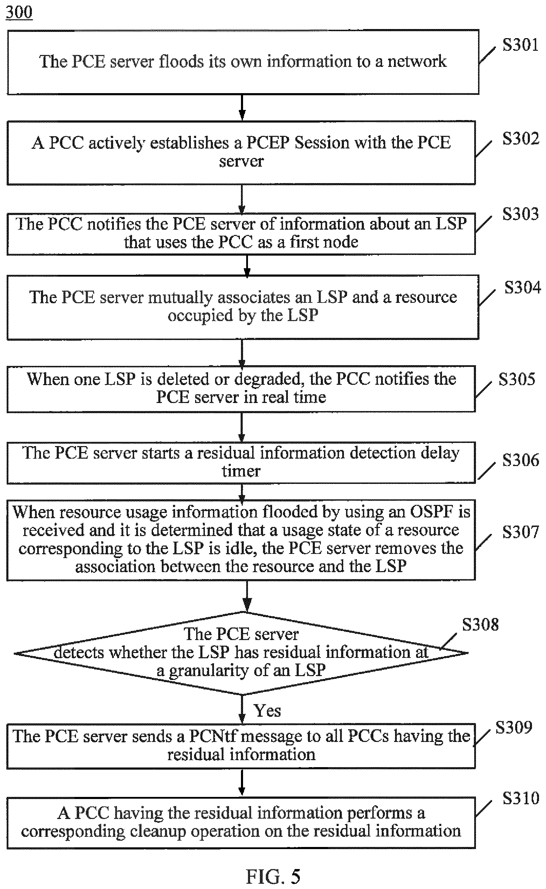

To describe the present invention more clearly, the following describes in detail a method for processing residual information according to an embodiment of the present invention with reference to FIG. 5. FIG. 5 is a schematic flowchart of a method 300 for processing residual information according to an embodiment of the present invention. As shown in FIG. 5, the method 300 may include:
S301: After a PCE server is deployed on a network and the PCE server starts, the PCE server floods its own information to the network.
S302: After discovering the PCE server, a PCC actively establishes a PCEP Session (session) with the PCE server.
S303: Once the PCEP Session is established, the PCC notifies the PCE server of information about an LSP that uses the PCC as a first node, and if the LSP changes subsequently, the PCC also synchronizes the change with the PCE server in time.
S304: The PCE server maintains information about LSPs on an entire network, and correlates the LSP and a resource occupied by the LSP.
S305: When one LSP is deleted or degraded, the PCC notifies the PCE server in real time.
S306: The PCE server receives the notification of the LSP deletion or degradation, and the PCE server does not remove the association between the LSP and the resource immediately, but starts a residual information detection delay timer. This is because, when deleting the LSP, the PCC notifies the PEC server before the LSP is deleted completely and successfully. Instead, the PCC, which serves as the first node, notifies the PCE server immediately after the PCC completes processing of a delete action. In this way, when the PCE server receives the notification of the LSP deletion, the LSP is not necessarily deleted completely and successfully. Therefore, the timer needs to start to wait for flooding, by using the OSPF, of resource usage information of each PCC. Duration of the timer depends on OSPF domain convergence time.
S307: When a resource usage information flooded by using the OSPF is received and it is determined that a usage state of the resource corresponding to the LSP is idle, the PCE server removes the association between the resources and the LSP, that is, the resources are no longer occupied by the LSP.
S308: After the residual information detection delay timer times out, the PCE server detects whether the LSP has residual information at a granularity of an LSP. At this time, the PCE server no longer determines specific bandwidth occupation states on the two ends of a link but simply determines whether all or a part of the resources previously occupied by the LSP are still occupied by the LSP. A specific situation may be as follows:

If all or a part of the resources previously occupied by the LSP are still occupied by the LSP, it indicates that the LSP is not deleted completely and the resources occupied by the LSP have the residual information.

If none of the resources previously occupied by the LSP are occupied by the LSP, two situations exist herein:
Situation 1: All of the resources are idle, which indicates that the LSP is deleted completely.
Situation 2: All of the resources or a part of the resources are occupied by one or more of other LSPs, which also indicates that the LSP is deleted completely, and the resources released by the LSP are also occupied by the other LSPs.

Both of the foregoing two situations indicate that there is no residual information on the LSP.

S309: If it is detected that the LSP has residual information, the PCE server sends simultaneously a PCNtf message to all PCCs having the residual information, where the message may carry four-tuples (an address of a first node of a tunnel to which the LSP belongs, an address of a last node of the tunnel, and an identifier of the tunnel, and an identifier of the LSP) information of the LSP having the residual information, and a specific operation (such as delete and degrade), so that each PCC having the residual information may perform residual information clearing synchronously.

S310: After receiving the PCNtf message sent by the PCE server, the PCC having the residual information may perform a corresponding cleanup operation on the residual information according to the four-tuples of the LSP having the residual information, and the specific operation that are carried in the message.

Therefore, the method for processing residual information in this embodiment of the present invention may improve accuracy for detecting residual information, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

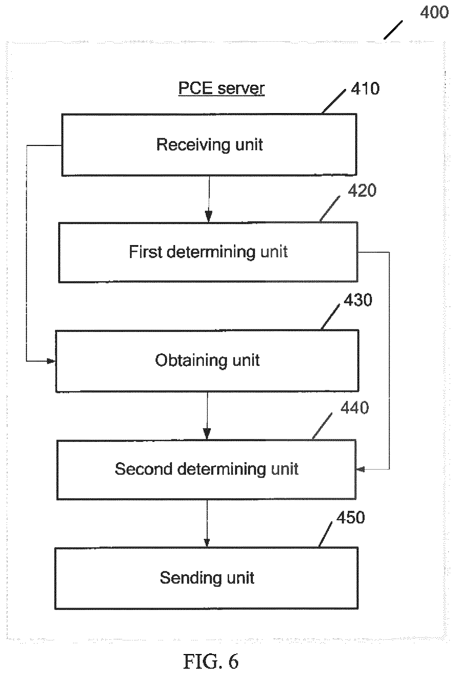

The foregoing has described the methods for processing residual information according to the embodiments of the present invention with reference to FIG. 1 to FIG. 5. The following describes apparatuses, that is, a PCE server and a PCC, for processing residual information according to embodiments of the present invention with reference to FIG. 6 to FIG. 10.

FIG. 6 is a schematic block diagram of a PCE server 400 according to an embodiment of the present invention. As shown in FIG. 6, the PCE server 400 includes: a receiving unit 410, a first determining unit 420, an obtaining unit 430, a second determining unit 440, and a sending unit 450, where:
the receiving unit 410 is configured to receive first information, sent by a first path computation client PCC, about a first LSP;
the first determining unit 420 is configured to determine, according to the first information received by the receiving unit 410, information about a resource occupied by the first LSP;
the receiving unit 410 is further configured to receive second information, sent by the first PCC, about the first LSP, where the second information is used to indicate that the first LSP needs to be deleted or the first LSP needs to be degraded;
the obtaining unit 430 is configured to obtain a resource deletion situation corresponding to the first LSP after the receiving unit 410 receives the second information;
the second determining unit 440 is configured to determine whether the first LSP has residual information according to the information about the resource occupied by the first LSP and the resource deletion situation corresponding to the first LSP; and
the sending unit 450 is configured to, when the second determining unit 440 determines that the first LSP has residual information, send a notification message to a path computation client PCC having the residual information on the first LSP, where the notification message is used to indicate deletion or degradation of the first LSP.

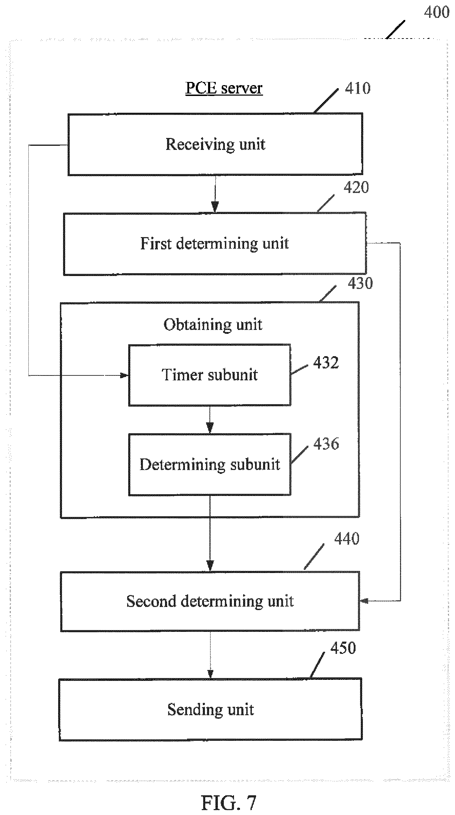

Optionally, as shown in FIG. 7, the obtaining unit 430 includes a timer subunit 432 and a determining subunit 436, where:
the timer subunit 432 is configured to start a timer after the receiving unit 410 receives the second information sent by the first PCC; and
the determining subunit 436 is configured to determine the resource deletion situation according to resource usage information of a PCC on the first LSP received by the receiving unit 410 within duration set on the timer, where the resource deletion situation indicates that a PCC has deleted a resource corresponding to the first LSP.

Optionally, the resource usage information of the PCC on the first LSP is carried by using an OSPF flooding message.

Optionally, the duration set on the timer depends on OSPF domain convergence time.

Optionally, the sending unit 450 is specifically configured to:
send simultaneously the notification message to PCCs having the residual information on the first LSP.

Optionally, the notification message carries an address of a first node of a tunnel to which the first LSP belongs, an address of a last node of the tunnel, and an identifier of the tunnel, and an identifier of the first LSP.

It should be understood that, the PCE server 400 according to this embodiment of the present invention may correspond to the PCE server in the method 100 or 300 for processing residual information in the embodiments of the present invention, and the foregoing and other operations and/or functions of each unit in the PCE server 400 are intended to respectively implement a corresponding process of each method in FIG. 1 or FIG. 5. For brevity, details are not described herein again.

Therefore, in this embodiment of the present invention, first information, sent by a first PCC, about a first LSP is received and, according to the first information, information about a resource occupied by the first LSP is determined; a resource deletion situation corresponding to the first LSP is obtained after second information, sent by the first PCC, about the first LSP is received, where the second information is used to indicate that the first LSP needs to be deleted or the first LSP needs to be degraded; and when it is determined that the first LSP has residual information according to the information about the resource occupied by the first LSP and the source deletion situation corresponding to the first LSP, a notification message is sent to a PCC having the residual information on the first LSP, where the notification message is used to indicate deletion or degradation of the first LSP, by means of which accuracy for detecting residual information is improved, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

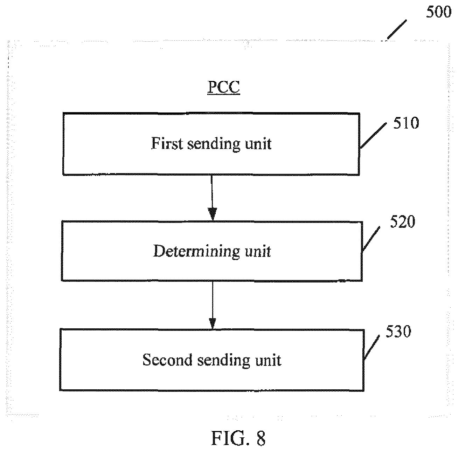

FIG 8 is a schematic block diagram of a PCC 500 according to an embodiment of the present invention. As shown in FIG. 8, the PCC 500 includes a first sending unit 510, a determining unit 520, and a second sending unit 530, where:
the first sending unit 510 is configured to send first information about a first LSP to a PCE server, so that the PCE server determines information about a resource occupied by the first LSP according to the first information;
the determining unit 520 is configured to determine that the first LSP needs to be deleted or degraded; and
the second sending unit 530 is configured to: when the determining unit 520 determines that the first LSP needs to be deleted or degraded, send second information about the first LSP to the PCE server, where the second information is used to indicate that the first LSP needs to be deleted or the first LSP needs to be degraded, so that the PCE server obtains a resource deletion situation corresponding to the first LSP after receiving the second information; and when it is determined that the first LSP has residual information according to the information about the resource occupied by the first LSP and the resource deletion situation corresponding to the first LSP, send a notification message to a PCC having the residual information on the first LSP, where the notification message is used to indicate deletion or degradation of the first LSP.

It should be understood that, the PCC 500 according to this embodiment of the present invention may correspond to the PCC in the method 200 or 300 for processing residual information in the embodiments of the present invention, and the foregoing and other operations or functions or both of each unit in the PCC 500 are intended to respectively implement a corresponding process of each method in FIG. 4 or FIG. 5. For brevity, details are not described herein again.

Therefore, in this embodiment of the present invention, first information that is used to indicate a resource occupied by a first LSP is sent to a PCE server, and when it is determined that the first LSP needs to be deleted or degraded, second information is sent to the PCE server, where the second information is used to indicate that the first LSP needs to be deleted or the first LSP needs to be degraded. Thereby, after the PCE server receives the second information, a resource deletion situation corresponding to the first LSP may be obtained; and when it is determined that the first LSP has residual information according to information about the resource occupied by the first LSP and the resource deletion situation corresponding to the first LSP, a notification message is sent to a PCC having the residual information on the first LSP, where the notification message is used to indicate deletion or degradation of the first LSP. Therefore, accuracy for detecting residual information is improved, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

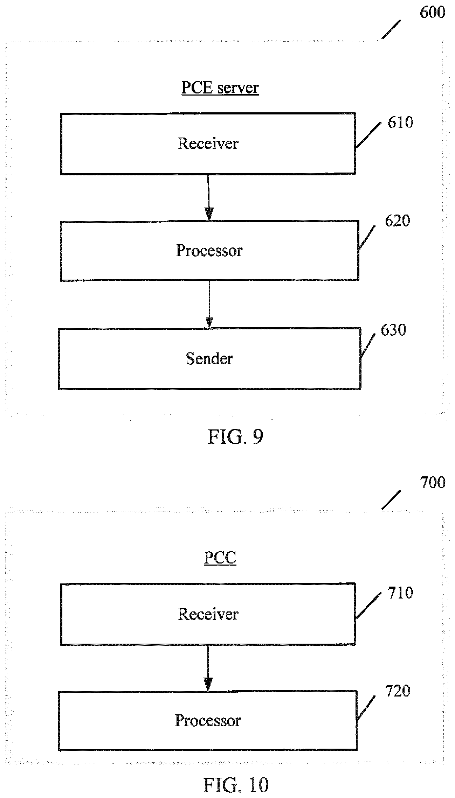

FIG. 9 is a schematic block diagram of a PCE server 600 according to an embodiment of the present invention. As shown in FIG 9, the PCE server 600 includes a receiver 610, a processor 620 and a sender 630, where:
the receiver 610 is configured to receive first information, sent by a first PCC, about a first LSP;
the processor 620 is configured to determine, according to the first information received by the receiver 610, information about a resource occupied by the first LSP ;
the receiver 610 is further configured to receive second information, sent by the first PCC, about the first LSP, where the second information is used to indicate that the first LSP needs to be deleted or the first LSP needs to be degraded;
the processor 620 is further configured to obtain a resource deletion situation corresponding to the first LSP after the receiver 610 receives the second information;
the processor 620 is further configured to determine whether the first LSP has residual information according to the information about the resource occupied by the first LSP and the resource deletion situation corresponding to the first LSP; and
the sender 630 is configured to, when the processor 620 determines that the first LSP has residual information, send a notification message to a PCC having the residual information on the first LSP, where the notification message is used to indicate deletion or degradation of the first LSP.

Optionally, the processor 620 is specifically configured to:
start a timer after the receiver 610 receives the second information sent by the first PCC; and
determine the resource deletion situation according to resource usage information of a PCC on the first LSP received by the receiver 610 within duration set on the timer, where the resource deletion situation indicates that a PCC has deleted a resource corresponding to the first LSP.

Optionally, the resource usage information of the PCC on the first LSP is carried by using an OSPF flooding message.

Optionally, the duration set on the timer depends on OSPF domain convergence time.

Optionally, the sender 630 is specifically configured to:
send simultaneously the notification message to PCCs having the residual information on the first LSP.

Optionally, the notification message carries an address of a first node of a tunnel to which the first LSP belongs, an address of a last node of the tunnel, and an identifier of the tunnel, and an identifier of the first LSP.

It should be understood that, the PCE server 600 according to this embodiment of the present invention may correspond to the PCE server in the method 100 or 300 for processing residual information in the embodiments of the present invention, and the foregoing and other operations or functions or both of each unit in the PCE server 600 are intended to respectively implement a corresponding process of each method in FIG. 1 or FIG. 5. For brevity, details are not described herein again.

Therefore, in this embodiment of the present invention, first information, sent by a first PCC, about a first LSP is received and, according to the first information, information about a resource occupied by the first LSP is determined; a resource deletion situation corresponding to the first LSP is obtained after second information, sent by the first PCC, about the first LSP is received, where the second information is used to indicate that the first LSP needs to be deleted or the first LSP needs to be degraded; and when it is determined that the first LSP has residual information according to the information about the resource occupied by the first LSP and the source deletion situation corresponding to the first LSP, a notification message is sent to a PCC having the residual information on the first LSP, where the notification message is used to indicate deletion or degradation of the first LSP; by means of which accuracy for detecting residual information is improved, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

FIG 10 is a schematic block diagram of a PCC 700 according to an embodiment of the present invention. As shown in FIG. 10, the PCC 700 includes a sender 710 and a processor 720, where:
the sender 710 is configured to send first information about a first LSP to a PCE server, so that the PCE server determines information about a resource occupied by the first LSP according to the first information;
the processor 720 is configured to determine that the first LSP needs to be deleted or degraded; and
the sender 710 is further configured to: when the processor 720 determines that the first LSP needs to be deleted or degraded, send second information about the first LSP to the PCE server, where the second information is used to indicate that the first LSP needs to be deleted or the first LSP needs to be degraded, so that the PCE server obtains a resource deletion situation corresponding to the first LSP after receiving the second information; and when it is determined that the first LSP has residual information according to the information about the resource occupied by the first LSP and the resource deletion situation corresponding to the first LSP, send a notification message to a PCC having the residual information on the first LSP, where the notification message is used to indicate deletion or degradation of the first LSP.

It should be understood that, the PCC 700 according to this embodiment of the present invention may correspond to the PCC in the method 200 or 300 for processing residual information according to the embodiments of the present invention, and the foregoing and other operations or functions or both of each unit in the PCC 700 are intended to respectively implement a corresponding process of each method in FIG. 4 or FIG. 5. For brevity, details are not described herein again.

Therefore, in this embodiment of the present invention, first information that is used to indicate a resource occupied by a first LSP is sent to a PCE server, and when it is determined that the first LSP needs to be deleted or degraded, second information about the first LSP is sent to the PCE server, where the second information is used to indicate that the first LSP needs to be deleted or the first LSP needs to be degraded. Thereby, after the PCE server receives the second information, a resource deletion situation corresponding to the first LSP may be obtained; and when it is determined that the first LSP has residual information according to information about the resource occupied by the first LSP and the resource deletion situation corresponding to the first LSP, a notification message is sent to a PCC having the residual information on the first LSP, where the notification message is used to indicate deletion or degradation of the first LSP. Therefore, accuracy for detecting residual information is improved, thereby highly simplifying detection and clearing of residual information on an entire network. In addition, in the present invention, detection and clearing of residual information are performed at a granularity of an LSP, and end-to-end LSP information can be viewed. Once it is detected that an LSP has residual information, clearing is performed in parallel on each node having the residual information. Therefore, compared with a solution in which detection and clearing are performed in serial and at a granularity of a link in the prior art, accuracy and efficiency are significantly improved in the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing apparatuses, and units, reference may be made to a corresponding process in the foregoing method embodiments, and details are not described herein again.

In the several embodiments provided in the present application, it should be understood that the disclosed apparatuses and methods may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for processing residual information, comprising:
receiving (S110), by a path computation element, PCE, server, first information, sent by a first path computation client PCC, about a first label switched path LSP, and determining, according to the first information, information about a resource occupied by the first LSP, wherein the first information includes a node and a link passed by the first LSP, and a timeslot occupied on the link;
obtaining (S120) a resource deletion situation corresponding to the first LSP after receiving second information, sent by the first PCC, about the first LSP, wherein the second information is used to indicate that the first LSP needs to be deleted or the first LSP needs to be degraded, wherein the second information is sent by the first PCC to the PCE server after the first PCC completes a deletion action, the resource deletion situation indicates which of the resources occupied by the first LSP have been deleted by a corresponding PCC; and
when it is determined by the PCE server, that the first LSP has residual information according to the information about the resource occupied by the first LSP and the resource deletion situation corresponding to the first LSP, sending (S130) simultaneously a notification message to PCCs having the residual information on the first LSP, wherein the notification message is used to indicate deletion or degradation of the first LSP; wherein the residual information includes control information on a control plane corresponding to the first LSP, and a residual cross connection on a forwarding plane corresponding to the first LSP.

2. The method according to claim 1, wherein the obtaining a resource deletion situation corresponding to the first LSP comprises:
starting a timer after receiving the second information; and
determining the resource deletion situation according to resource usage information of a PCC on the first LSP received within duration set on the timer, wherein the resource deletion situation indicates that a PCC has deleted a resource corresponding to the first LSP.

3. The method according to claim 2, wherein the resource usage information of a PCC on the first LSP is carried by using an Open Shortest Path First OSPF flooding message.

4. The method according to claim 3, wherein the duration set on the timer depends on OSPF domain convergence time.

5. The method according to any one of claims 1 to 4, wherein the notification message carries an address of a first node of a tunnel to which the first LSP belongs, an address of a last node of the tunnel, an identifier of the tunnel, and an identifier of the first LSP.

6. A method for processing residual information, comprising:
sending (S210) first information about a first label switched path LSP to a path computation element PCE server, so that the PCE server determines information about a resource occupied by the first LSP according to the first information, wherein the first information includes a node and a link passed by the first LSP, and a timeslot occupied on the link; and
when it is determined that the first LSP needs to be deleted or degraded, sending (S220) second information about the first LSP to the PCE server, wherein the second information is used to indicate that the first LSP needs to be deleted or the first LSP needs to be degraded, so that the PCE server obtains a resource deletion situation corresponding to the first LSP after receiving the second information, wherein the second information is sent by the first PCC to a path computation element, PCE, server after the first PCC completes a deletion action, the resource deletion situation indicates which of the resources occupied by the first LSP have been deleted by a corresponding PCC; and when it is determined by the PCE server, that the first LSP has residual information according to the information about the resource occupied by the first LSP and the resource deletion situation corresponding to the first LSP, sending simultaneously a notification message to PCCs having the residual information on the first LSP, wherein the notification message is used to indicate deletion or degradation of the first LSP; wherein the residual information includes control information on a control plane corresponding to the first LSP, and a residual cross connection on a forwarding plane corresponding to the first LSP.

7. A path computation element PCE server, comprising a receiving unit (410), a first determining unit (420), an obtaining unit (430), a second determining unit (440), and a sending unit (450), wherein:
the receiving unit (410) is configured to receive first information, sent by a first path computation client PCC, about a first label switched path LSP, wherein the first information includes a node and a link passed by the first LSP, and a timeslot occupied on the link;
the first determining unit (420) is configured to determine, according to the first information received by the receiving unit, information about a resource occupied by the first LSP;
the receiving unit (410) is further configured to receive second information, sent by the first PCC, about the first LSP, wherein the second information is used to indicate that the first LSP needs to be deleted or the first LSP needs to be degraded;
the obtaining unit (430) is configured to, after the receiving unit receives the second information, obtain a resource deletion situation corresponding to the first LSP, wherein the second information is sent by the first PCC to the PCE server after the first PCC completes a deletion action, the resource deletion situation indicates which of the resources occupied by the first LSP have been deleted by a corresponding PCC;
the second determining unit (440) is configured to determine whether the first LSP has residual information according to the information about the resource occupied by the first LSP and the resource deletion situation corresponding to the first LSP; and
the sending unit (450) is configured to, when the second determining unit of the PCE server determines that the first LSP has residual information, send simultaneously a notification message to PCCs having the residual information on the first LSP, wherein the notification message is used to indicate deletion or degradation of the first LSP;
wherein the residual information includes control information on a control plane corresponding to the first LSP, and a residual cross connection on a forwarding plane corresponding to the first LSP.

8. The PCE server according to claim 7, wherein the obtaining unit comprises a timer subunit and a determining subunit, wherein:
the timer subunit is configured to start a timer after the receiving unit (430) receives the second information sent by the first PCC; and
the determining subunit is configured to determine the resource deletion situation according to resource usage information of a PCC on the first LSP received by the receiving unit within duration set on the timer, wherein the resource deletion situation indicates that a PCC has deleted a resource corresponding to the first LSP.

9. The PCE server according to claim 8, wherein the resource usage information of a PCC on the first LSP is carried by using an Open Shortest Path First OSPF flooding message.

10. The PCE server according to claim 9, wherein the duration set on the timer depends on OSPF domain convergence time.

11. The PCE server according to any one of claims 7 to 10, wherein the notification message carries an address of a first node of a tunnel to which the first LSP belongs, an address of a last node of the tunnel, an identifier of the tunnel, and an identifier of the first LSP.

12. A path computation client PCC (500), comprising a first sending unit, a determining unit, and a second sending unit, wherein:
the first sending unit (510) is configured to send first information about a first label switched path LSP to a path computation element PCE server, so that the PCE server determines, according to the first information, information about a resource occupied by the first LSP, wherein the first information includes a node and a link passed by the first LSP, and a timeslot occupied on the link;
the determining unit (520) is configured to determine that the first LSP needs to be deleted or degraded; and
the second sending unit (530) is configured to: when the determining unit determines that the first LSP needs to be deleted or degraded, send second information about the first LSP to the PCE server, wherein the second information is used to indicate that the first LSP needs to be deleted or the first LSP needs to be degraded, so that the PCE server obtains a resource deletion situation corresponding to the first LSP after receiving the second information, wherein the second information is sent by the first PCC to a path computation element, PCE, server after the first PCC completes a deletion action, the resource deletion situation indicates which of the resources occupied by the first LSP have been deleted by a corresponding PCC; and when it is determined by the PCE server that the first LSP has residual information according to the information about the resource occupied by the first LSP and the resource deletion situation corresponding to the first LSP, send simultaneously a notification message to PCCs having the residual information on the first LSP, wherein the notification message is used to indicate deletion or degradation of the first LSP; wherein the residual information includes control information on a control plane corresponding to the first LSP, and a residual cross connection on a forwarding plane corresponding to the first LSP.

## Patentansprüche

1. Verfahren zum Verarbeiten von restlichen Informationen, das Folgendes umfasst:
Empfangen (S110) von ersten Informationen durch einen Wegberechnungselement-Server, PCE-Server, die durch einen ersten Wegberechnungs-Client PCC gesendet werden, über einen ersten etikettgeschalteten Weg LSP und Bestimmen von Informationen über eine Ressource gemäß den ersten Informationen, die vom ersten LSP belegt ist, wobei die ersten Informationen einen Knoten und eine Verbindung, die durch den ersten LSP durchlaufen wird, und einen auf der Verbindung belegten Zeitschlitz umfassen;
Erhalten (S120) einer Ressourcenlöschsituation, die dem ersten LSP entspricht, nach dem Empfangen von zweiten Informationen, die durch den ersten PCC gesendet werden, über den ersten LSP, wobei die zweiten Informationen verwendet werden, um anzugeben, dass der erste LSP gelöscht werden muss oder der erste LSP herabgestuft werden muss, wobei die zweiten Informationen durch den ersten PCC zum PCE-Server gesendet werden, nachdem der erste PCC eine Löschhandlung vollendet, die Ressourcenlöschsituation angibt, welche der vom ersten LSP belegten Ressourcen durch einen entsprechenden PCC gelöscht wurden; und
wenn durch den PCE-Server festgestellt wird, dass der erste LSP restliche Informationen aufweist, gemäß den Informationen über die vom ersten LSP belegte Ressource und der dem ersten LSP entsprechenden Ressourcenlöschsituation, gleichzeitiges Senden (S130) einer Benachrichtigungsmeldung zu PCCs mit den restlichen Informationen auf dem ersten LSP, wobei die Benachrichtigungsmeldung verwendet wird, um das Löschen oder die Herabstufung des ersten LSP anzugeben;
wobei die restlichen Informationen Steuerinformationen auf einer dem ersten LSP entsprechenden Steuerebene und eine restliche Kreuzverbindung auf einer dem ersten LSP entsprechenden Weiterleitungsebene umfassen.

2. Verfahren nach Anspruch 1, wobei das Erhalten einer Ressourcenlöschsituation, die dem ersten LSP entspricht, Folgendes umfasst:
Starten eines Zeitgebers nach dem Empfangen der zweiten Informationen; und
Bestimmen der Ressourcenlöschsituation gemäß den Ressourcennutzungsinformationen eines PCC auf dem ersten LSP, die innerhalb der am Zeitgeber festgelegten Dauer empfangen werden, wobei die Ressourcenlöschsituation angibt, dass ein PCC eine Ressource, die dem ersten LSP entspricht, gelöscht hat.

3. Verfahren nach Anspruch 2, wobei die Ressourcennutzungsinformationen eines PCC auf dem ersten LSP unter Verwendung einer Open-Shortest-Path-First-(OSPF)-Überlaufineldung getragen werden.

4. Verfahren nach Anspruch 3, wobei die am Zeitgeber festgelegte Dauer von einer OSPF-Domänenkonvergenzzeit abhängt.

5. Verfahren nach einem der Ansprüche 1 bis 4, wobei die Benachrichtigungsmeldung eine Adresse eines ersten Knotens eines Tunnels, zu dem der erste LSP gehört, eine Adresse eines letzten Knotens des Tunnels, einen Identifizierer des Tunnels und einen Identifizierer des ersten LSP trägt.

6. Verfahren zum Verarbeiten von restlichen Informationen, das Folgendes umfasst:
Senden (S210) von ersten Informationen über einen ersten etikettgeschalteten Weg LSP zu einem Wegberechnungselement-Server, PCE-Server, so dass der PCE-Server Informationen über eine vom ersten LSP belegte Ressource gemäß den ersten Informationen bestimmt, wobei die ersten Informationen einen Knoten und eine Verbindung, die vom ersten LSP durchlaufen wird, und einen auf der Verbindung belegten Zeitschlitz umfassen; und
wenn festgestellt wird, dass der erste LSP gelöscht oder herabgestuft werden muss, Senden (S220) von zweiten Informationen über den ersten LSP zum PCE-Server, wobei die zweiten Informationen verwendet werden, um anzugeben, dass der erste LSP gelöscht werden muss oder der erste LSP herabgestuft werden muss, so dass der PCE-Server eine Ressourcenlöschsituation, die dem ersten LSP entspricht, nach dem Empfangen der zweiten Informationen erhält, wobei die zweiten Informationen durch den ersten PCC zu einem Wegberechnungselement-Server, PCE-Server, gesendet werden, nachdem der erste PCC eine Löschhandlung vollendet, die Ressourcenlöschsituation angibt, welche der vom ersten LSP belegten Ressourcen durch einen entsprechenden PCC gelöscht wurden; und wenn durch den PCE-Server festgestellt wird, dass der erste LSP restliche Informationen aufweist, gemäß den Informationen über die vom ersten LSP belegte Ressource und der dem ersten LSP entsprechenden Ressourcenlöschsituation, gleichzeitiges Senden einer Benachrichtigungsmeldung zu PCCs mit den restlichen Informationen auf dem ersten LSP, wobei die Benachrichtigungsmeldung verwendet wird, um das Löschen oder die Herabstufung des ersten LSP anzugeben; wobei die restlichen Informationen Steuerinformationen auf einer dem ersten LSP entsprechenden Steuerebene und eine restliche Kreuzverbindung auf einer dem ersten LSP entsprechenden Weiterleitungsebene umfassen.

7. Wegberechnungselement-Server, PCE-Server, mit einer Empfangseinheit (410), einer ersten Bestimmungseinheit (420), einer Erhaltungseinheit (430), einer zweiten Bestimmungseinheit (440) und einer Sendeeinheit (450), wobei:
die Empfangseinheit (410) dazu konfiguriert ist, erste Informationen, die durch einen ersten Wegberechnungs-Client PCC gesendet werden, über einen ersten etikettgeschalteten Weg LSP zu empfangen, wobei die ersten Informationen einen Knoten und eine Verbindung, die vom ersten LSP durchlaufen wird, und einen auf der Verbindung belegten Zeitschlitz umfassen;
die erste Bestimmungseinheit (420) dazu konfiguriert ist, gemäß den durch die Empfangseinheit empfangenen ersten Informationen Informationen über eine vom ersten LSP belegte Ressource zu bestimmen;
die Empfangseinheit (410) ferner dazu konfiguriert ist, zweite Informationen, die durch den ersten PCC gesendet werden, über den ersten LSP zu empfangen, wobei die zweiten Informationen verwendet werden, um anzugeben, dass der erste LSP gelöscht werden muss oder der erste LSP herabgestuft werden muss;
die Erhaltungseinheit (430) dazu konfiguriert ist, nachdem die Empfangseinheit die zweiten Informationen empfängt, eine dem ersten LSP entsprechende Ressourcenlöschsituation zu erhalten, wobei die zweiten Informationen durch den ersten PCC zum PCE-Server gesendet werden, nachdem der erste PCC eine Löschhandlung vollendet, die Ressourcenlöschsituation angibt, welche der vom ersten LSP belegten Ressourcen durch einen entsprechenden PCC gelöscht wurden;
die zweite Bestimmungseinheit (440) dazu konfiguriert ist zu bestimmen, ob der erste LSP restliche Informationen aufweist, gemäß den Informationen über die vom ersten LSP belegte Ressource und der dem ersten LSP entsprechenden Ressourcenlöschsituation; und
die Sendeeinheit (450) dazu konfiguriert ist, wenn die zweite Bestimmungseinheit des PCE-Servers bestimmt, dass der erste LSP restliche Informationen aufweist, gleichzeitig eine Benachrichtigungsmeldung zu PCCs mit den restlichen Informationen auf dem ersten LSP zu senden, wobei die Benachrichtigungsmeldung verwendet wird, um das Löschen oder die Herabstufung des ersten LSP anzugeben;
wobei die restlichen Informationen Steuerinformationen auf einer dem ersten LSP entsprechenden Steuerebene und eine restliche Kreuzverbindung auf einer dem ersten LSP entsprechenden Weiterleitungsebene umfassen.

8. PCE-Server nach Anspruch 7, wobei die Erhaltungseinheit eine Zeitgeberuntereinheit und eine Bestimmungsuntereinheit umfasst, wobei:
die Zeitgeberuntereinheit dazu konfiguriert ist, einen Zeitgeber zu starten, nachdem die Empfangseinheit (430) die durch den ersten PCC gesendeten zweiten Informationen empfängt; und
die Bestimmungsuntereinheit dazu konfiguriert ist, die Ressourcenlöschsituation gemäß Ressourcennutzungsinformationen eines PCC auf dem ersten LSP, die durch die Empfangseinheit innerhalb der am Zeitgeber festgelegten Dauer empfangen werden, zu bestimmen, wobei die Ressourcenlöschsituation angibt, dass ein PCC eine dem ersten LSP entsprechende Ressource gelöscht hat.

9. PCE-Server nach Anspruch 8, wobei die Ressourcennutzungsinformationen eines PCC auf dem ersten LSP unter Verwendung einer Open-Shortest-Path-First-(OSPF)-Überlaufineldung getragen werden.

10. PCE-Server nach Anspruch 9, wobei die am Zeitgeber festgelegte Dauer von einer OSPF-Domänenkonvergenzzeit abhängt.

11. PCE-Server nach einem der Ansprüche 7 bis 10, wobei die Benachrichtigungsmeldung eine Adresse eines ersten Knotens eines Tunnels, zu dem der erste LSP gehört, eine Adresse eines letzten Knotens des Tunnels, einen Identifizierer des Tunnels und einen Identifizierer des ersten LSP trägt.

12. Wegberechnungs-Client PCC (500) mit einer ersten Sendeeinheit, einer Bestimmungseinheit und einer zweiten Sendeeinheit, wobei:
die erste Sendeeinheit (510) dazu konfiguriert ist, erste Informationen über einen ersten etikettgeschalteten Weg LSP zu einem Wegberechnungselement-Server, PCE-Server, zu senden, so dass der PCE-Server gemäß den ersten Informationen Informationen über eine vom ersten LSP belegte Ressource bestimmt, wobei die ersten Informationen einen Knoten und eine vom ersten LSP durchlaufene Verbindung und einen auf der Verbindung belegten Zeitschlitz umfassen;
die Bestimmungseinheit (520) dazu konfiguriert ist zu bestimmen, dass der erste LSP gelöscht oder herabgestuft werden muss; und
die zweite Sendeeinheit (530) dazu konfiguriert ist: wenn die Bestimmungseinheit bestimmt, dass der erste LSP gelöscht oder herabgestuft werden muss, zweite Informationen über den ersten LSP zum PCE-Server zu senden, wobei die zweiten Informationen verwendet werden, um anzugeben, dass der erste LSP gelöscht werden muss oder der erste LSP herabgestuft werden muss, so dass der PCE-Server eine Ressourcenlöschsituation, die dem ersten LSP entspricht, nach dem Empfangen der zweiten Informationen erhält, wobei die zweiten Informationen durch den ersten PCC zu einem Wegberechnungselement-Server, PCE-Server, gesendet werden, nachdem der erste PCC eine Löschhandlung vollendet, die Ressourcenlöschsituation angibt, welche der vom ersten LSP belegten Ressourcen durch einen entsprechenden PCC gelöscht wurden; und wenn durch den PCE-Server bestimmt wird, dass der erste LSP restliche Informationen aufweist, gemäß den Informationen über die vom ersten LSP belegte Ressource und der dem ersten LSP entsprechenden Ressourcenlöschsituation, gleichzeitig eine Benachrichtigungsmeldung zu PCCs mit den restlichen Informationen auf dem ersten LSP zu senden, wobei die Benachrichtigungsmeldung verwendet wird, um das Löschen oder die Herabstufung des ersten LSP anzugeben; wobei die restlichen Informationen Steuerinformationen auf einer dem ersten LSP entsprechenden Steuerebene und eine restliche Kreuzverbindung auf einer dem ersten LSP entsprechenden Weiterleitungsebene umfassen.

## Revendications

1. Procédé de traitement d'informations résiduelles, comprenant :
la réception (S110), par un serveur d'éléments de calcul de chemin, PCE, de premières informations, envoyées par un premier client de calcul de chemin PCC, relatives à un premier chemin commuté par étiquettes LSP, et la détermination, en fonction des premières informations, d'informations relatives à une ressource occupée par le premier LSP, dans lequel les premières informations comportent un noeud et un lien passés par le premier LSP, et une tranche de temps occupée sur le lien ;
l'obtention (S120) d'une situation de suppression de ressources correspondant au premier LSP après la réception de secondes informations, envoyées par le premier PCC, relatives au premier LSP, dans lequel les secondes informations servent à indiquer que le premier LSP doit être supprimé ou que le premier LSP doit être dégradé, dans lequel les secondes informations sont envoyées par le premier PCC au serveur PCE après que le premier PCC achève une action de suppression, la situation de suppression de ressources indiquant celles des ressources occupées par le premier LSP qui ont été supprimées par un PCC correspondant ; et
quand il est déterminé par le serveur PCE, que le premier LSP a des informations résiduelles en fonction des informations relatives à la ressource occupée par le premier LSP et la situation de suppression de ressources correspondant au premier LSP, l'envoi (S130) simultanément d'un message de notification aux PCC ayant les informations résiduelles sur le premier LSP, dans lequel le message de notification est utilisé pour indiquer une suppression ou une dégradation du premier LSP ; dans lequel les informations résiduelles comportent des informations de commande sur un plan de commande correspondant au premier LSP, et une interconnexion résiduelle sur un plan d'acheminement correspondant au premier LSP.

2. Procédé selon la revendication 1, dans lequel l'obtention d'une situation de suppression de ressources correspondant au LSP comprend :
le lancement d'une temporisation après la réception des secondes informations ; et
la détermination de la situation de suppression de ressources en fonction d'informations d'utilisation de ressources d'un PCC sur le premier LSP reçues durant une durée établie sur la temporisation, dans lequel la situation de suppression de ressources indique qu'un PCC a supprimé une ressource correspondant au premier LSP.

3. Procédé selon la revendication 2, dans lequel les informations d'utilisation de ressources d'un PCC sur le premier LSP sont convoyées au moyen d'un message "ouvrir chemin le plus court en premier" (OSPF) envoyé en masse.

4. Procédé selon la revendication 3, dans lequel la durée établie sur la temporisation dépend du temps de convergence dans le domaine OSPF.

5. Procédé selon l'une quelconque des revendications 1 à 4, dans lequel le message de notification convoie une adresse d'un premier noeud d'un tunnel auquel appartient le premier LSP, une adresse d'un dernier noeud du tunnel, un identifiant du tunnel, et un identifiant du premier LSP.

6. Procédé de traitement d'informations résiduelles, comprenant :
l'envoi (S210) de premières informations relatives à un premier chemin commuté par étiquettes LSP à un serveur d'éléments de calcul de chemin PCE, de telle sorte que le serveur PCE détermine des informations relatives à une ressource occupée par le premier LSP en fonction des premières informations, dans lequel les premières informations comportent un noeud et un lien passés par le premier LSP, et une tranche de temps occupée sur le lien ; et
quand il est déterminé que le premier LSP doit être supprimé ou dégradé, l'envoi (S220) de secondes informations relatives au premier LSP au serveur PCE, dans lequel les secondes informations servent à indiquer que le premier LSP doit être supprimé ou que le premier LSP doit être dégradé de telle sorte que le serveur PCE obtienne une situation de suppression de ressources correspondant au premier LSP après la réception des secondes informations, dans lequel les secondes informations sont envoyées par le premier PCC à un serveur d'éléments de calcul de chemin, PCE, après que le premier PCC achève une action de suppression, la situation de suppression de ressources indiquant celles des ressources occupées par le premier LSP qui ont été supprimées par un PCC correspondant ; et quand il est déterminé par le serveur PCE, que le premier LSP a des informations résiduelles en fonction des informations relatives à la ressource occupée par le premier LSP et la situation de suppression de ressources correspondant au premier LSP, l'envoi simultanément d'un message de notification aux PCC ayant les informations résiduelles sur le premier LSP, dans lequel le message de notification est utilisé pour indiquer une suppression ou une dégradation du premier LSP ; dans lequel les informations résiduelles comportent des informations de commande sur un plan de commande correspondant au premier LSP, et une interconnexion résiduelle sur un plan d'acheminement correspondant au premier LSP.

7. Serveur d'éléments de calcul de chemin PCE, comprenant une unité de réception (410), une première unité de détermination (420), une unité d'obtention (430), une seconde unité de détermination (440), et une unité d'envoi (450), dans lequel :
l'unité de réception (410) est configurée pour recevoir des premières informations, envoyées par un premier client de calcul de chemin PCC, relatives à un premier chemin commuté par étiquettes LSP, dans lequel les premières informations comportent un noeud et un lien passés par le premier LSP, et une tranche de temps occupée sur le lien ;
la première unité de détermination (420) est configurée pour déterminer, en fonction des premières informations reçues par l'unité de réception, des informations relatives à une ressource occupée par le premier LSP ;
l'unité de réception (410) est configuré en outre pour recevoir des secondes informations, envoyées par le premier PCC, relatives au premier LSP, dans lequel les secondes informations servent à indiquer que le premier LSP doit être supprimé ou que le premier LSP doit être dégradé ;
l'unité d'obtention (430) est configurée pour, après que l'unité de réception reçoit les secondes informations, obtenir une situation de suppression de ressources correspondant au premier LSP, dans lequel les secondes informations sont envoyées par le premier PCC au serveur PCE après que le premier PCC achève une action de suppression, la situation de suppression de ressources indiquant celles des ressources occupées par le premier LSP qui ont été supprimées par un PCC correspondant ;
la seconde unité de détermination (440) est configurée pour déterminer que le premier LSP a ou non des informations résiduelles en fonction des informations relatives à la ressource occupée par le premier LSP et la situation de suppression de ressources correspondant au premier LSP ; et l'unité d'envoi (450) est configurée pour, quand la seconde unité de détermination du serveur PCE détermine que le premier LSP a des informations résiduelles, envoyer simultanément un message de notification aux PCC ayant les informations résiduelles sur le premier LSP, dans lequel le message de notification est utilisé pour indiquer une suppression ou une dégradation du premier LSP ; dans lequel les informations résiduelles comportent des informations de commande sur un plan de commande correspondant au premier LSP, et une interconnexion résiduelle sur un plan d'acheminement correspondant au premier LSP.

8. Serveur PCE selon la revendication 7, dans lequel l'unité d'obtention comprend une sous-unité de temporisation et une sous-unité de détermination, dans lequel :
la sous-unité de temporisation est configurée pour lancer une temporisation après que l'unité de réception (430) reçoit les secondes informations envoyées par le premier PCC ; et
la sous-unité de détermination est configurée pour déterminer la situation de suppression de ressources en fonction des informations d'utilisation de ressources d'un PCC sur le premier LSP reçues par l'unité de réception durant une durée établie sur la temporisation, dans lequel la situation de suppression de ressources indique qu'un PCC a supprimé une ressource correspondant au premier LSP.

9. Serveur PCE selon la revendication 8, dans lequel les informations d'utilisation de ressources d'un PCC sur le premier LSP sont convoyées au moyen d'un message "ouvrir chemin le plus court en premier" (OSPF) envoyé en masse.

10. Serveur PCE selon la revendication 9, dans lequel la durée établie sur la temporisation dépend du temps de convergence dans le domaine OSPF.

11. Serveur PCE selon l'une quelconque des revendications 7 à 10, dans lequel le message de notification convoie une adresse d'un premier noeud d'un tunnel auquel appartient le premier LSP, une adresse d'un dernier noeud du tunnel, un identifiant du tunnel, et un identifiant du premier LSP.

12. Client de calcul de chemin PCC (500), comprenant une première unité d'envoi, une unité de détermination, et une seconde unité d'envoi, dans lequel :
la première unité d'envoi (510) est configurée pour envoyer des premières informations relatives à un premier chemin commuté par étiquettes LSP à un serveur d'éléments de calcul de chemin PCE, de telle sorte que le serveur PCE détermine en fonction des premières informations, des informations relatives à une ressource occupée par le premier LSP, dans lequel les premières informations comportent un noeud et un lien passés par le premier LSP, et une tranche de temps occupée sur le lien ;
l'unité de détermination (520) est configurée pour déterminer que le premier LSP doit être supprimé ou dégradé ; et
la seconde unité d'envoi (530) est configurée pour : quand l'unité de détermination détermine que le premier LSP doit être supprimé ou dégradé, envoyer des secondes informations relatives au premier LSP au serveur PCE, dans lequel les secondes informations servent à indiquer que le premier LSP doit être supprimé ou que le premier LSP doit être dégradé de telle sorte que le serveur PCE obtienne une situation de suppression de ressources correspondant au premier LSP après la réception des secondes informations, dans lequel les secondes informations sont envoyées par le premier PCC à un serveur d'éléments de calcul de chemin, PCE, après que le premier PCC achève une action de suppression, la situation de suppression de ressources indiquant celles des ressources occupées par le premier LSP qui ont été supprimées par un PCC correspondant ; et quand il est déterminé par le serveur PCE, que le premier LSP a des informations résiduelles en fonction des informations relatives à la ressource occupée par le premier LSP et la situation de suppression de ressources correspondant au premier LSP, envoyer simultanément un message de notification aux PCC ayant les informations résiduelles sur le premier LSP, dans lequel le message de notification est utilisé pour indiquer une suppression ou une dégradation du premier LSP ; dans lequel les informations résiduelles comportent des informations de commande sur un plan de commande correspondant au premier LSP, et une interconnexion résiduelle sur un plan d'acheminement correspondant au premier LSP.
